# EUROPÄISCHE PATENTSCHRIFT

(11) **EP 1 510 686 B1**
(45) Veröffentlichungstag und Bekanntmachung des Hinweises auf die Patenterteilung: **03.11.2010**
(21) Anmeldenummer: 03019862.6
(22) Anmeldetag: 01.09.2003
(51) Int. Cl.: F02M 31/135, F02M 31/125

(54) **Heizeinrichtung für ein zu beheizendes Medium**
Heating device for a medium to be heated
Dispositif de chauffage pour un milieu à chauffer

(43) Veröffentlichungstag der Anmeldung: 02.03.2005
(73) Patentinhaber: DBK David + Baader GmbH, 76870 Kandel (DE)
(72) Erfinder: Kühn, Alexander Dipl.-Ing., 76131 Karlsruhe / Baden (DE); Caspers, Michael Dr., 69469 Weinheim (DE)
(74) Vertreter: Polte, Willi

(56) Entgegenhaltungen:
- EP-A- 0 642 293
- EP-A- 0 657 199
- EP-A- 1 158 158
- US-A- 4 717 808
- US-B1- 6 186 125

## Beschreibung

Die Erfindung betrifft eine Heizeinrichtung gemäß dem Oberbegriff des Anspruchs 1.

Eine derartige Heizeinrichtung ist aus der EP 0 657 199 A2 bekannt. Eine ähnliche Heizeinrichtung ist in EP 0 642 293 A1 offenbart.

Heizeinrichtungen nach der oben genannten Art werden in Verbrennungsmotoren vielseitig eingesetzt, wie zum Beispiel zur Beheizung von Kraftstoffen oder von Kurbelgehäusegasen, oder auch zur Beheizung von Ventilen.

Verschiedene Heizkonzepte wurden bisher realisiert:

Eine elektrische Heizeinrichtung für Dieselkraftstoff ist beispielsweise aus der Europäischen Patentanmeldung EP 0 581 176 A2 bekannt. Darin wird eine elektrische Heizeinrichtung vorgeschlagen, die sich für ein modular aufgebautes System eignet. In einem scheibenförmigen Gehäuse sind dabei zwei Kontaktplatten und drei PTC - (Positive-Temperature-Coefficient) Heizelemente angeordnet. Von Federn, die sich dabei von einer Deckplatte des Gehäuses abstützen, werden die Heizelemente dabei auf gehäusefeste Schultern gedrückt, die gut vom Dieselkraftstoff umspült werden und so für einen guten Wärmeübergang sorgen.
In der beschriebenen Ausführungsform ist die gesamte Baugruppe verhältnismäßig groß.

Aus der Druckschrift EP 0 657 199 A2 ist beispielsweise eine solche Heizeinrichtung bekannt, bei der zwei PTC - Elemente zwischen zwei Kontaktplatten mit Hilfe zweier Spiralfedern angepresst werden. Mit einer Vielzahl von Schrauben werden die beiden übereinanderliegenden Kontaktplatten fixiert und am Gehäuse festgeschraubt. Zwischen den beiden Kontaktplatten befinden sich die PTC - Elemente und Federelemente, die für den notwendigen Kontaktdruck sorgen sollen.

Gerade im Motorraum eines Kraftfahrzeugs unterliegen Bauteile enormen Belastungen, wie zum Beispiel starken Temperaturschwankungen und Vibrationen. Die widrigen Umstände beschleunigen den Verschleiß und erhöhen die Versagenswahrscheinlichkeit erheblich. Zudem werden, bedingt durch die ständigen Weiterentwicklungen im Motorbau, an derartige Heizeinrichtungen immer höhere Anforderungen gestellt.

Der Erfindung liegt daher die Aufgabe zugrunde, die Zuverlässigkeit und die Haltbarkeit einer Heizeinrichtung der eingangs erwähnten Art zu erhöhen, und die Anzahl der Bauteile sowie den benötigten Einbauraum zu verringern.

Die Aufgabe wird gelöst durch eine Heizeinrichtung nach Anspruch 1.

Für die Zuverlässigkeit und Haltbarkeit der Heizeinrichtung hat es sich als wesentlich herausgestellt, dass der elektrische und thermische Kontakt zwischen den Heizelementen und den Kontaktplatten dauerhaft erhalten bleibt. Unter Verwendung einer gewölbten Blattfeder ist - für die gesamte Lebensdauer des Fahrzeugs - der hohe Kontaktdruck zwischen einem Heizelement und einer Kontaktplatte gewährleistet: Die Federkraft einer gewölbten Blattfeder, lässt, auch bei deutlich höheren Federkräften wesentlich langsamer nach als bei einer Spiralfeder mit vergleichbarer Federkraft (durch Setzen). Auch ermöglicht dies eine sehr kompakte Bauweise, da die gewölbte Blattfeder einen erheblich geringen Einbauraum als die vergleichbare Spiralfeder benötigt: Unter Druckbelastung dehnt sich die gewölbte Blattfeder dabei in einer Richtung senkrecht zum Wölbungsrücken aus. Die Federkraft resultiert daher nicht ausschließlich aus der Aufstauchung der Feder in einer Richtung entgegen der Druckkraft, sondern auch in einer Richtung senkrecht dazu. Die gewölbte Blattfeder eignet sich wegen ihrer geringen Dicke hervorragend für die hier angewandte Sandwichbauweise.
Die Blattfeder stellt dabei den Kontaktdruck zwischen einem Heizelement und einer Kontaktplatte her. Gewöhnlich ist das Federelement zwischen zumindest einem Heizelement und zumindest einer Kontaktplatte angeordnet. Das Federelement stützt sich dabei von der Kontaktplatte ab und überträgt auf vorteilhafte Weise die Federkraft auf das Heizelement. Dadurch lässt sich eine besonders hohe Kontaktdruckkraft erzielen.

Als besonders geeignet erweist sich eine wellenförmig gewölbte Blattfeder. Durch die Wellenform kann eine höhere Federkonstante als bei der einfach gewölbten Blattfeder erzielt werden, was den Kontaktdruck zwischen dem Heizelement und einer Kontaktplatte weiter erhöht. Besonders geeignet ist dabei eine Ausführung mit drei Wellen: Das Federelement kann sich auf einer harten Unterlage wie der Kontaktplatte an mehreren Stellen abstützen und die Druckkraft besonders gleichmäßig - endseitig und mittelseitig (an insgesamt drei Stellen) - auf das Heizelement übertragen.

Auch eignet es sich, um den Bauraum sehr kompakt zu halten, besonders gut, das Federelement so anzuordnen dass es sich in seiner Längsrichtung im Wesentlichen parallel zu zumindest einer Kontaktplatte erstreckt.

Es erweist sich für den Einbau als besonders günstig, wenn das Federelement Federabschnitte aufweist, die mit Verbindungsabschnitten verbunden sind. Ein solches, Federelement mit mehreren Federabschnitten erfüllt somit die Funktion von vielen einzelnen Blattfedern, ist aber ein einziges Bauteil, so dass insgesamt weniger Teile montiert werden.

Auch erweist es sich als besonders vorteilhaft, wenn das Federelement zumindest abschnittsweise ringförmig ist. Dies eignet sich besonders dann, wenn die Kontaktplatten kreis- bzw. ringförmig sind und erlaubt es, das Federelement ideal in den Bauraum zwischen zwei kreis- bzw. ringförmigen Kontaktplatten zu integrieren.

In einer bevorzugten Ausführungsform ist das Federelement ein Federring. Dies eignet sich besonders dann, wenn das Heizelement kreis- bzw. ringförmig ist. Die Ausbildung des Federelements als ein Federring besitzt den herstellungstechnischen Vorteil, dass weniger Teile montiert werden müssen, da einzelne Federelemente mit Verbindungselementen einstückig zusammen gehalten werden.

Besonders bei ringförmigen Federelementen ist es von großem Vorteil, wenn die Rücken der Federwölbungen sich im Wesentlichen in der Längsrichtung des Federelements erstrecken. Der Federring dehnt sich dabei in radialer Richtung.

Bei gewöhnlichen, z.B. rechteckigen Federelementen mit einer längeren Längsseite und einer kürzeren Breitseite verbessert es die Federeigenschaften weiter, wenn die Rücken der Federwölbungen sich im Wesentlichen senkrecht zur Längsrichtung des Federelements erstrecken. Unter Druckbelastung bewirkt die auf die Wölbungen der Blattfeder ausgeübte Kraft dann eine Dehnung der Feder in ihrer Längsrichtung. Die Federdehnung wird dabei auf die beiden längsseitigen Enden des Federelements gelenkt, wo sie ideal abgestützt werden kann.

Entlang der längeren Längsseite der Feder können auch mehr Wölbungen angebracht werden als auf der kürzeren Breitseite. Dadurch kann auch die Anzahl der Auflagepunkte erhöht werden, was den Anpressdruck des Federelements auf das Heizelement noch gleichmäßiger verteilt.

Als besonders vorteilhaft erweist es sich, wenn in einer Draufsicht auf die gewölbte Fläche die Grundfläche des Federelements in etwa der Grundfläche des Heizelements entspricht. Dies ist unabhängig davon, ob das Heizelement einen ring- bzw. kreisförmigen oder rechteckigen Grundriss aufweist: Hat das Heizelement einen ring- bzw. kreisförmigen Grundriss, so ist ein entsprechender, gewölbter Federring wohl am besten als Federelement geeignet. Dadurch kann das Heizelement über seine gesamte Anlagefläche mit möglichst gleichmäßiger Druckverteilung an einer Kontaktplatte anliegen. Da der Anpressdruck auch den Wärmeübergangskoeffizient zwischen dem Heizelement und der Kontaktplatte beeinflusst, erfolgt der Wärmeübergang zwischen beiden Elementen in dieser Ausführungsform auch besonders gleichmäßig.

Erfindungsgemäß ist zumindest ein Positionselement zwischen den Kontaktplatten angeordnet, um das Heizelement und das Federelement zu fixieren. Dadurch bleiben diese Elemente in ihrer vorbestimmten Position und können sich nicht verschieben. Dies ist besonders hilfreich beim Zusammenbau des gesamten Heizelements.

Ein besonders geeignetes Material für die Herstellung des Positionselements ist Kunststoff. Bezüglich der Material- und Herstellungskosten ist Kunststoff zunächst aus wirtschaftlichen Gründen interessant. Ferner ist die Formgebung solcher Kunststoffelemente verhältnismäßig einfach. Zudem wirkt das Kunststoffbauteil als elektrischer und vor allem als thermischer Isolator, da Wärme bevorzugt von den Heizelementen auf die Kontaktplatten übertragen werden soll und nicht auf die umgebenden Bauteile.

Als besonders vorteilhaft erweist es sich zudem, wenn das Positionselement zumindest eine Öffnung zur Aufnahme jeweils wenigstens eines Federelements und eines Heizelements aufweist. In der Öffnung können das Heizelement und das Federelement genau übereinander liegen und in dieser Position nicht verrutschen. Auch so kann die Federkraft des Federelements ideal auf das Heizelement wirken.

Es erweist sich als besonders günstig, wenn das Federelement an zwei im Wesentlichen gegenüberliegenden Enden in Richtung der Federdehnung abstützt ist. Unter dauerhafter Druckbelastung kann sich auch eine gewölbte Blattfeder z.B. mit Wellenprofil setzen. Dadurch ließe die Federkraft nach, und ebenso der Kontaktdruck zwischen dem Heizelement und einer Kontaktplatte. Durch das endseitige Abstützen der Blattfeder kann deren gewölbte Form und die daraus resultierende Federkraft somit besonders lange auf hohem Niveau gehalten werden.

In einer besonders vorteilhaften Ausführungsform entspricht die Dicke des Positionselements in etwa der Einbauhöhe des Heizelements und des Federelements. Das Heizelement und das Federelement verschwinden somit fast völlig in der Öffnung des Positionselements, so dass ein Herausfallen der beiden Elemente verhindert wird.

Es erweist sich als besonders vorteilhaft, wenn die Kontaktplatten und das Positionselement im Wesentlichen ebene Platten sind. Dies erleichtert die Fertigung der Einzelbauteile, da diese ausgehend von einem ebenen Grundmaterial i.d.R. nur zurechtgeschnitten und gebohrt bzw. gestanzt werden müssen. Überdies kann somit der gesamte Bauraum der Heizeinheit sehr flach gehalten werden.

Für einen kompakten Bauraum erweist es sich selbstverständlich auch als vorteilhaft, wenn dabei die Kontaktplatten und das Positionselement im Wesentlichen parallel zueinander angeordnet sind. In dieser Ausführungsform ist das sogenannte Sandwichprinzip verwirklicht.

Zudem erweist es sich als vorteilhaft, wenn die Umlaufkanten der Kontaktplatten und des Positionselements im Wesentlichen fluchtend zueinander verlaufen. Die sich ergebende Einheit ist relativ kompakt und weist eindeutig definierte Begrenzungsflächen an allen Seiten auf.

In einer verbesserten Ausführungsform sind die Kontaktplatten ringförmig und eignen sich deshalb besonders gut für den Einbau in Ansaugkanälen und Kraftstofffiltern für Dieselmaschinen mit üblicherweise kreis- bzw. ringförmigem Querschnitt.

In einer weiteren, verbesserten Ausführungsform ist auch das Positionselement vorhanden und ist ebenso ringförmig. Demnach eignet sich auch die beschriebene Ausführung mit zwei ringförmigen Kontaktplatten und einer ringförmigen Positionsplatte besonders gut für den Einbau in Druckregelventilen mit ringförmigem Querschnitt.

Zudem stellt es sich als hilfreich heraus, wenn die Kontaktplatten zumindest eine im Wesentlichen koaxiale Halteöffnung aufweisen. In Verbindung mit einem Halteelement, das durch alle übereinander liegenden Durchgangsöffnungen greift, können die Kontaktplatten relativ zueinander ausgerichtet werden.

Als besonders günstig für die Ausführungsform mit zwei Kontaktplatten und einer Positionsplatte erweist es sich auch, wenn dabei ein verwendetes Positionselement zumindest eine Halteöffnung aufweist, die im Wesentlichen koaxial mit den Halteöffnungen durch die Kontaktplatten angeordnet ist. Ein Halteelement, das durch alle mit Halteöffnungen versehenen Schichten greift, richtet diese relativ zueinander aus.

In einer besonders bevorzugten Ausführungsform sind beide Kontaktplatten über eine Halteeinrichtung fest miteinander verbunden. Die Halteeinrichtung kann dabei z.B. ein externes Bauteil sein, das die Halteöffnungen durchdringt. Es ist aber auch denkbar, dass z.B. Abschnitte an einer der beider Kontaktplatten mit Abschnitten der jeweils anderen Kontaktplatte in Eingriff stehen und beide Kontaktplatten fest miteinander verbinden. Dadurch werden die äußeren Kontaktplatten gegen die Federkraft der Federelemente zusammengedrückt. Dabei drückt die eine Kontaktplatte auf das Federelement, welches wiederum das Heizelement gegen die zweite Kontaktplatte presst. Der für den Betrieb des Heizelements erforderliche Kontaktdruck zwischen dem Heizelement und einer Kontaktplatte ist in dieser Ausführungsform inhärent gegeben.
Dadurch entsteht eine in sich geschlossene, unabhängige Baugruppe, welche auch unabhängig von den voranstehenden Gestaltungsmerkmalen eine modulare Bauweise ermöglicht.

Es erweist sich auch als hilfreich ein externes Halteelement vorzusehen, das die koaxialen Halteöffnungen der Kontaktplatten und der Positionsplatten durchdringt. Beide Kontaktplatten können dabei nahezu baugleich ausgeführt werden, was den Fertigungsaufwand erheblich reduziert. Zudem werden die Kontaktplatten dadurch in Umfangsrichtung gegen relative Verschiebung gesichert.

In einer weiteren vorteilhaften Ausführungsform bestimmt die Dicke des Positionselements den minimalen Abstand der beiden Kontaktplatten unter Druckbelastung des Federelements. Die Baugruppe ist somit vollständig geschlossen. Auch kann dies eine zu große Druckkraft auf die Federelemente verhindern.

Auch zeigt sich ein Vorteil bei der Ausführungsform, bei der besagtes Halteelement aus Kunststoff besteht. Kunststoffbauteile sind i.d.R. mit verhältnismäßig kleinem Aufwand herstellbar.

Ferner ergibt sich ein weiterer Vorteil in der Gestaltungsform, dass das Haltelement ein Nietring ist. Dafür vorgesehene Nieten können durch die Halteöffnungen dringen und auf der Austrittsseite aus einer Kontaktplatte vernietet werden. Die Fertigung ist besonders einfach und die Nietverbindung kann gegenüber einer Schraubverbindung i.d.R. nicht zerstörungsfrei gelöst werden.

Nach einer bevorzugten Verarbeitungsmethode wird die zusammengebaute Heizeinrichtung dann als modulare Baugruppe weiterverwendet und in ein anderes Bauteil eingespritzt. Allein die beiden Kontaktanschlüsse sollten ausgespart werden. Die beiden Anschlussstücke sind dabei Abschnitte der jeweiligen Kontaktplatten, die teilweise freigeschnitten und zurechtgebogen werden. Diese Art der Fertigung hat den Vorteil, dass die Heizeinrichtung ohne Zwischenschaltung aufwendiger Montageschritte fest mit einem anderen Bauteil verbunden werden kann. Da die Heizeinrichtung inhärent für den notwendigen Kontaktdruck zwischen Heizelement und Kontaktplatte sorgen kann ist die Funktion der Heizeinrichtung nicht von der Art der Befestigung an einem weitern Bauteil abhängig.

Nachfolgend wird die Erfindung und deren Anwendung und Funktionsweise anhand eines Ausführungsbeispiels näher erläutert.

Es zeigen:
- Fig. 1: eine Explosionsansicht einer Ausführungsform des PTC - Heizelements,
- Fig. 2: eine Ansicht eines zusammengebauten PTC - Heizelements,
- Fig. 3: einen Schnitt durch zwei Nieten im zusammengebauten Zustand, und
- Fig. 4: eine Explosionsansicht einer weiteren Ausführungsform des Heizelements;

### Ausführungsbeispiel:

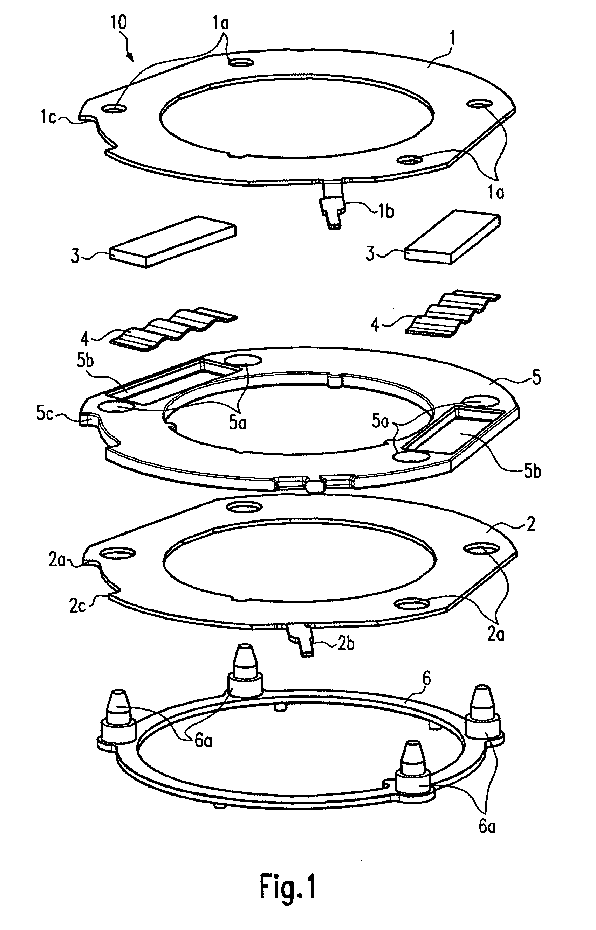

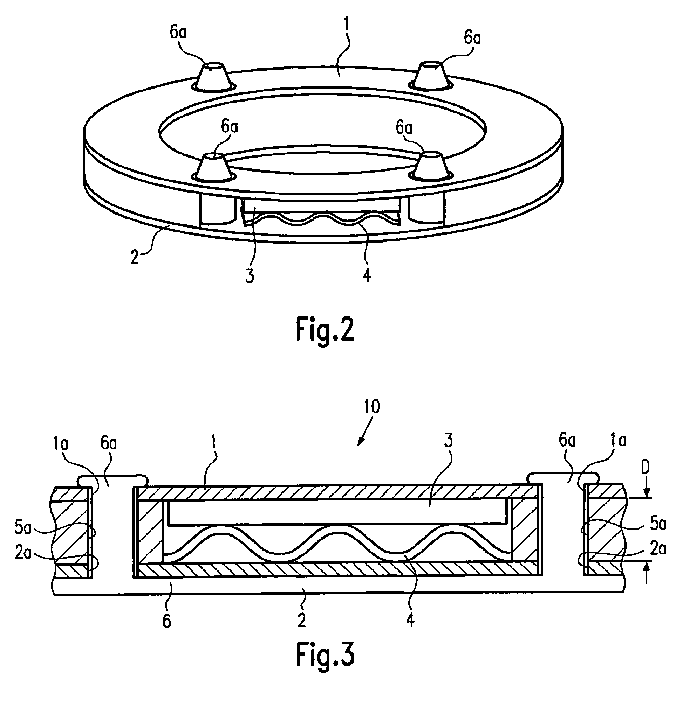

Das Ausführungsbeispiel nach Figur 1 zeigt eine Explosionsansicht einer erfindungsgemäßen Heizeinrichtung. Eine solche Heizeinrichtung ist gemeinhin als PTC - Heizeinrichtung bekannt, in der PTC - Heizelemente elektrische Energie in Wärme umwandeln und an ein über die beheizten Flächen fließendes Medium abgeben. Die Funktionsweise eines solchen PTC - Heizelements wird als bekannt vorausgesetzt und wird daher an dieser Stelle nicht näher beschrieben.
In der beschriebenen Ausführungsform stellt die erfindungsgemäße Heizeinrichtung eine modulare Baugruppe dar, die relativ einfach mit anderen Bauteilen zusammengebaut werden kann. Die gezeigte Heizeinrichtung ist nach der Sandwichbauweise erstellt.
Die Heizeinrichtung 10 nach Fig. 1 zeigt eine obere und eine untere Kontaktplatte 1 und 2, zwischen denen jeweils zwei PTC - Elemente 3 und zwei Federelemente 4 angeordnet sind. Im zusammengebauten Zustand liegt je ein Federelement 4 auf der unteren Kontaktplatte 2 auf und wirkt mit dieser zusammen um den notwendigen Kontaktdruck des PTC - Heizelements 3 and die obere Kontaktplatte 1 zu erzeugen. Dazu liegt das PTC - Heizelement 3 auf dem Federelement 4 auf.
Die beiden Kontaktplatten 1,2 sind im Wesentlichen ringförmig und flach, und aus gut (für Wärme- und Strom) leitendem, ebenen Grundmaterial hergestellt (z.B. Aluminiumplatte). Sie dienen dazu, die erzeugte Wärme möglichst wirkungsvoll auf das Kontaktmedium zu übertragen. Am äußeren Umfang beider Kontaktplatten 1 und 2 sind elektrische Kontakte 1 b und 2b mit einem Plus- und einem Minuskontakt vorgesehen, um die Kontaktplatten an einen Stromkreis anzuschließen. Die beiden Kontakte 1 b und 2b sind dabei außenseitige, den Kontaktplatten 1 und 2 anhängige Abschnitte, die durch einen Stanzvorgang mit den Kontaktplatten hergestellt werden.
Ferner sind am äußeren Umfang beider Kontaktplatten Einkerbungen 1 c und 2c vorgesehen. Diese Einkerbungen dienen zur Aufnahme von Fixierabschnitten der unteren Kontaktplatte (nicht gezeigt), die mit einem Werkzeug in diese Auskerbungen gebogen werden können.
Die PTC - Elemente 3 sind in dieser Ausführungsform quaderförmig mit rechteckigem Grundriss und sind verhältnismäßig flach.
Die gewölbten Blattfedern 4 sind aus einem ebenen Grundmaterial geformt und haben ein wellenförmiges Profil. Die Grundfläche dieser Blattfedern 4 ist - in einer Draufsicht auf die gewölbte Fläche - der Grundfläche der verwendeten Heizelemente genau angepasst. In der gezeigten Ausführung ist die Grundfläche der Blattfedern also rechteckig.
Eine Positionsplatte 5 ist vorgesehen um die PTC - Elemente 3, sowie die Federelemente 4 genau in Position zu halten. Die Positionsplatte 5 ist eben und besteht vorzugsweise aus Kunststoff. In der gezeigten Ausführung liegt die Positionsplatte 5 zwischen den Kontaktplatten 1 und 2, und hat im Wesentlichen den gleichen ringförmigen Grundriss. Im Randbereich der Positionsplatte 5 sind zwei Öffnungen 5b vorgesehen um jeweils ein Federelement 4 und ein PTC - Heizelement 3 aufzunehmen. Die Größe der Öffnungen 5b entspricht dabei in etwa dem Grundriss eines Federelements 4 bzw. eines Heizelements 3. Das Federelement 4 ist, der Grundfläche nach, im unbelasteten Zustand genau gleich groß wie das Heizelement 3 und passt in die dafür vorgesehene Öffnung 5b. Im unbelasteten Zustand liegt das Federelement 4 ziemlich genau an den Randbereichen der Öffnung 5b im Positionselement 5 an. Werden die beiden Kontaktplatten 1 und 2 zusammengedrückt, so dehnen sich die Federelemente 4 infolge der Krafteinwirkung aus. Übermäßige Federdehnung wird dadurch verhindert, dass die Blattfedern 4 in Richtung der Federdehnung endseitig abgestützt sind. In der gezeigten Ausführungsform sind die Rücken der Federwölbungen senkrecht zur Längsrichtung der Federelemente 4 angeordnet. Die Federelemente 4 liegen ihrer Längsrichtung nach in einer Ebene parallel zu und zwischen den beiden Kontaktplatten 1 und 2.
Die Dicke des Positionselements 5 ist so bemessen, dass das PTC - Heizelement 3 und ein darunter liegendes Federelement 4 im unbelasteten Zustand nahezu vollständig in einer der Öffnungen 5a verschwindet. Übereinander liegend sind aber jeweils ein Federelement 4 und ein PTC - Element 3 geringfügig dicker als die Positionsplatte um den Kontaktdruck zwischen den PTC - Elementen 3 und der oberen Kontaktplatte 1 zu erzeugen. Es kann aber auch ein Absatz an einer oder beiden Kontaktplatten vorgesehen werden, der in die Öffnung 5b des Positionselements 5 hineinragt. Unter der Druckbelastung wird der minimale Abstand der beiden Kontaktplatten 1,2 von der Dicke der Positionsplatte 5 bestimmt, sofern die Federelemente 3 unter dem Druck entsprechend nachgeben.
Ferner ist ein Nietring 6 aus Kunststoff vorgesehen, der vier Nieten 6a aufweist, die in vier entsprechend dafür vorgesehene Durchgangsbohrungen 1a, 2a und 5a in den Kontaktplatten 1 und 2 sowie der Positionsplatte 5 eingreifen. Die Durchgangsbohrungen 1 a, 2a und 5a in den Kontaktplatten 1 und 2 sowie der Positionsplatte 5 liegen dabei koaxial, d.h. die Bohrlöcher liegen dabei genau übereinander. Im zusammengebauten Zustand in Fig. 3 durchdringen die Nieten dabei die Durchgangsbohrungen 1 a, 2a und 5a vollständig und sind auf der Seite der oberen Kontaktplatte 1 vemietet. Die Kontaktplatten 1 und 2 werden somit fest miteinander verbunden. Ferner sind die Kontaktplatten 1 und 2 sowie die Positionsplatte 5 dadurch gegen Verschiebung in axialer Richtung und in Umfangsrichtung gesichert.
Die Durchgangsbohrungen 5a in der Positionsplatte 5 sind dabei so angeordnet, dass sie in Umfangsrichtung endseitig an die Öffnungen 5b anschließen, wie in Fig. 2 zu sehen ist. In den Bereichen jeweils endseitig zu den Federelementen in Richtung der Federdehnung ausgebildet erhöhen die Nieten 6a die Stützwirkung für die Federelemente.

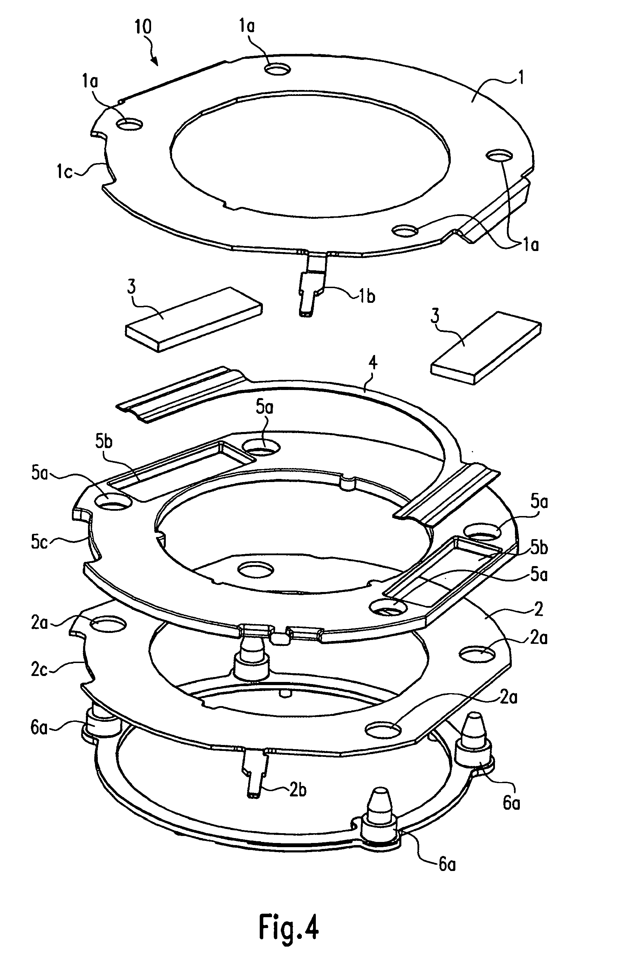

Figur 4 zeigt ein weiteres Ausführungsbeispiel eines Federelements 4. Die beiden Kontaktplatten 1,2 und die Positionsplatte 5 sind gegenüber dem in Figur 1 dargestellten Ausführungsbeispiel nahezu identisch und ebenso ringförmig. Im Folgenden wird daher nur die veränderte Form des Federelements 4 beschrieben. Das Federelement 4 zeigt zwei Federabschnitte, die über einen Verbindungsabschnitt verbunden sind. Die Federabschnitte passen genau in die Öffnungen 5b des Positionselements und sind im Wesentlichen rechteckförmig. Die Längsseite jedes Federabschnitts erstreckt sich jeweils tangential zu einem Kreis um den Mittelpunkt des Heizelements 10 und der Wölbungsrücken jedes Federabschnitts erstreckt sich mittig entlang dieser Längsseite. Der Verbindungsabschnitt, der beide Federabschnitte miteinander verbindet beschreibt im Wesentlichen ein Ringsegment. Das Federelement 4 ist somit zumindest abschnittsweise ringförmig und liegt vollständig im Zwischenraum der oberen und der unteren Kontaktplatte 1,2. Die Kontur des abschnittsweise ringförmigen Federelements 4 ist der Kontur der ringförmigen Kontaktplatten 1,2 angepasst. Auf der Unterseite des Positionselements 5 kann eine entsprechende Aussparung (nicht gezeigt) vorgesehen sein, die zur Aufnahme des flachen Verbindungsabschnitts bestimmt ist. Das Federelement 4 besteht aus einem ebenen Grundmaterial und ist aus einem einzigen Materialstück geformt (z.B. geschnitten, gestanzt).

Die Wirkungsweise der Heizeinrichtung 10 wird im Folgenden beschrieben.

Die Heizeinrichtung 10 wird z.B. im Einleitbereich des Ansaugkanals für einen Verbrennungsmotor eingesetzt.

Kurbelgehäusegas (Blow-by-Gas) entsteht durch Leckgasströme zwischen Kolben, Kolbenringen und Zylinderlaufflächen. Im Blow-by-Gas sind neben Öl auch Verbrennungsrückstände sowie Kraftstoffreste und Wasseranteile zu finden.

Je nach Zustand des Motors kann das Kurbelgehäusegas einen hohen Anteil an den gesamten Motorabgasen ausmachen. Zur Verringerung der Schadstoffemission wird das Blow-by-Gasgemisch in den Ansaugkanal des Motors zurückgeführt. Bei tiefen Außentemperaturen kann das im Gasgemisch enthaltene Wasser an der Übergangsstelle zur kalten Ansaugluft kondensieren, vereisen und so den Querschnitt des Ansaugkanals verengen bzw. ein Druckregelventil in geöffneter oder geschlossener Stellung blockieren. Eine Heizeinrichtung an der Übergangsstelle verhindert dies.

Auch zum Vorwärmen von Kraftstoffen werden derartige Heizeinrichtungen verwendet. Gewöhnlich werden diese Heizeinrichtungen dabei in den Gehäusedeckel des Kraftstofffilters integriert und werden vom Kraftstoff umströmt, wobei die in der Heizeinrichtung erzeugte Wärme an den Kraftstoff abgegeben wird.

Eine erfindungsgemäße Heizeinrichtung wird über die 2-poligen Kontaktstecker 1b und 2b verdrahtet und an einen Stromkreis eines Kraftfahrzeugs angeschlossen. Die Kontaktstecker 1 b und 2b sind dabei von den Kontaktplatten 1 und 2 abstehende und zurechtgebogene Abschnitte. Die Kontaktplatten 1 und 2 sind aus leitendem Material hergestellt. Zwischen den Kontaktplatten 1 und 2 sind dabei zwei Heizelemente 3 und zwei Federelemente 4 angeordnet, wobei jeweils ein Federelement 4 und ein Heizelement 3 übereinanderliegen und zwischen den Kontaktplatten festgeklemmt sind. Über die elektrisch leitfähigen Federelemente 4 und Heizelemente 3 ist der Stromkreis geschlossen.

Über die Kontaktplatten 1 und 2 wird der Strom zu den Heizelementen 3 geleitet.

Als Heizelemente 3 sind sogenannte PTC (Postitive-Temperature-Coefficient) Heizelemente vorgesehen, die Energie aus dem Bordnetz eines Kraftfahrzeugs ohne Zeitverzug direkt in Wärme umwandeln.

Ein PTC-Heizelement 3 ist ein temperaturabhängiger Halbleiterwiderstand aus Keramik mit einem - in einem bestimmten Temperaturintervall - stark ansteigenden Widerstand (Postitive-Temperature-Coefficient). Die Funktionsweise der PTC-Heizelemente wird als bekannt vorausgesetzt und wird an dieser Stelle nicht näher ausgeführt.

Entscheidend bei der Verwendung dieser PTC-Heizelemente ist dabei, dass der Kontakt zwischen den Heizelementen 3 und den Kontaktplatten 1 und 2 jederzeit erhalten bleibt: Zum einen um den Stromkreis zu schließen, zum anderen zur Wärmeübertragung auf die Kontaktplatten und das zu beheizende Medium.

Über den Nietring 6 sind die beiden Kontaktplatten 1 und 2 fest verbunden und die Heiz- und Federelemente 3 und 4 eingeklemmt. Die Positionsplatte 5 hält die Heizund Federelemente 3 und 4 dabei in Position und sorgt dafür, dass die beiden Elemente jeweils genau übereinanderliegen. Der Nietring 6 wirkt der von den Federelemente 4 erzeugten Kraft entgegen, die beide Kontaktplatten auseinander drückt.

Die erfindungsgemäße Einrichtung erfordert zur Beschränkung einer Maximaltemperatur kein aufwändiges Regelsystem. Die Maximaltemperatur kann mit der Wahl eines entsprechenden PTC - Elements implizit bestimmt werden. Ferner kann die Heizeinrichtung einfach über die Anschlusskontakte an einen Stromkreis angeschlossen werden und erschließt sich dadurch vielseitige Einsatzmöglichkeiten.

## Patentansprüche

1. Heizeinrichtung (10) für ein gasförmiges oder flüssiges zu beheizendes Medium mit zwei der Wärmeübertragung dienenden Kontaktplatten (1,2), zwischen denen zumindest ein Heizelement (3) und zumindest ein Federelement (4) angeordnet ist, um den Kontakt zwischen dem Heizelement (3) und wenigstens einer Kontaktplatte herzustellen, **dadurch gekennzeichnet, dass** das Federelement (4) eine gewölbte, vorzugsweise mehrfach gewölbte Blattfeder ist, und dass zumindest ein Positionselement (5) zwischen den Kontaktplatten (1,2) angeordnet ist, um das Heizelement (3) und das Federelement (4) zu fixieren.

2. Heizeinrichtung (10) nach Anspruch 1, **gekennzeichnet dadurch, dass** das Federelement (4) eine wellenförmige Blattfeder ist.

3. Heizeinrichtung (10) nach zumindest einem der vorhergehenden Ansprüche, **gekennzeichnet dadurch, dass** sich das Federelement (4) in seiner Längsrichtung im Wesentlichen parallel zu zumindest einer Kontaktplatte (1,2) erstreckt.

4. Heizeinrichtung (10) nach zumindest einem der vorhergehenden Ansprüche, **gekennzeichnet dadurch, dass** das Federelement (4) Federabschnitte aufweist, die mit Verbindungsabschnitten verbunden sind.

5. Heizeinrichtung (10) nach zumindest einem der vorhergehenden Ansprüche, **gekennzeichnet dadurch, dass** das Federelement (4) zumindest abschnittsweise ringförmig ist.

6. Heizeinrichtung (10) nach zumindest einem der vorhergehenden Ansprüche, **gekennzeichnet dadurch, dass** das Federelement (4) ein Federring ist.

7. Heizeinrichtung (10) nach zumindest einem der vorhergehenden Ansprüche, **gekennzeichnet dadurch, dass** die Rücken der Federwölbungen sich im Wesentlichen in der Längsrichtung des Federelements (4) erstrecken.

8. Heizeinrichtung (10) nach zumindest einem der vorhergehenden Ansprüche, **gekennzeichnet dadurch, dass** die Rücken der Federwölbungen sich im Wesentlichen senkrecht zur Längsrichtung des Federelements (4) erstrecken.

9. Heizeinrichtung (10) nach zumindest einem der vorhergehenden Ansprüche, **gekennzeichnet dadurch, dass** in einer Draufsicht auf die gewölbte Fläche, die Grundfläche des Federelements (4) in etwa der Grundfläche des Heizelements (3) entspricht.

10. Heizeinrichtung (10) nach zumindest einem der vorhergehenden Ansprüche, **gekennzeichnet dadurch, dass** das Positionselement (5) aus Kunststoff besteht.

11. Heizeinrichtung (10) nach zumindest einem der vorhergehenden Ansprüche, **gekennzeichnet dadurch, dass** das Positionselement (5) zumindest eine Öffnung (5b) zur Aufnahme jeweils wenigstens eines Federelements (4) und eines Heizelements (3) aufweist.

12. Heizeinrichtung nach zumindest einem der vorhergehenden Ansprüche, **gekennzeichnet dadurch, dass** das Federelement (4) an zwei im Wesentlichen gegenüberliegenden Enden (4b) in Richtung der Federdehnung abstützt ist.

13. Heizeinrichtung (10) nach zumindest einem der vorhergehenden Ansprüche, **gekennzeichnet dadurch, dass** die Dicke (D) des Positionselements (5) in etwa der Einbauhöhe (H) des Heizelements (3) und des Federelements (4) entspricht.

14. Heizeinrichtung (10) nach zumindest einem der vorhergehenden Ansprüche, **gekennzeichnet dadurch, dass** die Kontaktplatten (1,2) und das Positionselement (5) im Wesentlichen ebene Platten sind.

15. Heizeinrichtung (10) nach zumindest einem der vorhergehenden Ansprüche, **gekennzeichnet dadurch, dass** die Kontaktplatten (1,2) und das Positionselement (5) im Wesentlichen parallel zueinander angeordnet sind.

16. Heizeinrichtung (10) nach zumindest einem der vorhergehenden Ansprüche, **gekennzeichnet dadurch, dass** die Umlaufkanten der Kontaktplatten (1,2) und des Positionselements (5) im Wesentlichen fluchtend zueinander verlaufen.

17. Heizeinrichtung (10) nach zumindest einem der vorhergehenden Ansprüche, **gekennzeichnet dadurch, dass** die Kontaktplatten (1,2) im Wesentlichen ringförmig sind.

18. Heizeinrichtung (10) nach zumindest einem der vorhergehenden Ansprüche, **gekennzeichnet dadurch, dass** das Positionselement (5) im Wesentlichen ringförmig ist.

19. Heizeinrichtung (10) nach zumindest einem der vorhergehenden Ansprüche, **gekennzeichnet dadurch, dass** die Kontaktplatten (1,2) zumindest eine im Wesentlichen koaxiale Halteöffnung (1a,2a) aufweisen.

20. Heizeinrichtung (10) nach zumindest einem der vorhergehenden Ansprüche, **gekennzeichnet dadurch, dass** das Positionselement (5) zumindest Halteöffnung (5a) aufweist, die im Wesentlichen koaxial zu den Halteöffnungen der Kontaktplatten (1a,2a) angeordnet ist.

21. Heizeinrichtung (10) nach zumindest einem der vorhergehenden Ansprüche, **gekennzeichnet dadurch, dass** beide Kontaktplatten (1,2) über eine Halteeinrichtung fest miteinander verbunden sind.

22. Heizeinrichtung (10) nach zumindest einem der vorhergehenden Ansprüche, **gekennzeichnet dadurch, dass** ein Halteelement (6) beide Kontaktplatten (1,2) durchdringt und fest miteinander verbindet.

23. Heizeinrichtung (10) nach zumindest einem der vorhergehenden Ansprüche, **gekennzeichnet dadurch, dass** der Abstand der beiden Kontaktplatten (1,2) im verbundenen Zustand in etwa der Dicke des Positionselements (5) entspricht.

24. Heizeinrichtung (10) nach Anspruch 22 oder Anspruch 23, **gekennzeichnet dadurch, dass** das Halteelement (6) aus Kunststoff besteht.

25. Heizeinrichtung (10) nach zumindest einem der Ansprüche 23 bis 24, **gekennzeichnet dadurch, dass** das Halteelement (6) ein Nietring ist.

## Claims

1. A heating device (10) for a gaseous or liquid medium to be heated, comprising two contact plates (1, 2) serving to transfer heat, between which is disposed at least one heating element (3) and at least one spring element (4) in order to produce the contact between the heating element (3) and at least one contact plate, **characterised in that** the spring element (4) is a curved, preferably repeatedly curved leaf spring, and that at least one position element (5) is disposed between the contact plates (1, 2) in order to fix the heating element (3) and the spring element (4).

2. The heating device (10) according to Claim 1, **characterised in that** the spring element (4) is an undulating leaf spring.

3. The heating device (10) according to at least one of the preceding claims, **characterised in that** the spring element (4) extends in its longitudinal direction substantially parallel to at least one contact plate (1,2).

4. The heating device (10) according to at least one of the preceding claims, **characterised in that** the spring element (4) has spring sections which are connected to connection sections.

5. The heating device (10) according to at least one of the preceding claims, **characterised in that** the spring element (4) is annular, at least in some sections.

6. The heating device (10) according to at least one of the preceding claims, **characterised in that** the spring element (4) is a spring ring.

7. The heating device (10) according to at least one of the preceding claims, **characterised in that** the ridges of the spring curves extend substantially in the longitudinal direction of the spring element (4).

8. The heating device (10) according to at least one of the preceding claims, **characterised in that** the ridges of the spring curves extend substantially perpendicularly to the longitudinal direction of the spring element (4).

9. The heating device (10) according to at least one of the preceding claims, **characterised in that** in a top view onto the curved surface, the base area of the spring element (4) corresponds approximately to the base area of the heating element (3).

10. The heating device (10) according to at least one of the preceding claims, **characterised in that** the position element (5) is made of plastic.

11. The heating device (10) according to at least one of the preceding claims, **characterised in that** the position element (5) has at least one opening (5b) for respectively receiving at least one spring element (4) and one heating element (3).

12. The heating device according to at least one of the preceding claims, **characterised in that** the spring element (4) is supported on two substantially opposing ends (4b) in the direction of the extension of the spring.

13. The heating device (10) according to at least one of the preceding claims, **characterised in that** the thickness (D) of the position element (5) corresponds approximately to the installation height (H) of the heating element (3) and the spring element (4).

14. The heating device (10) according to at least one of the preceding claims, **characterised in that** the contact plates (1, 2) and the position element (5) are substantially level plates.

15. The heating device (10) according to at least one of the preceding claims, **characterised in that** the contact plates (1, 2) and the position element (5) are disposed substantially parallel to one another.

16. The heating device (10) according to at least one of the preceding claims, **characterised in that** the peripheral edges of the contact plates (1, 2) and of the position element (5) extend substantially flush to one another.

17. The heating device (10) according to at least one of the preceding claims, **characterised in that** the contact plates (1, 2) are substantially annular.

18. The heating device (10) according to at least one of the preceding claims, **characterised in that** the position element (5) is substantially annular.

19. The heating device (10) according to at least one of the preceding claims, **characterised in that** the contact plates (1, 2) have at least one substantially coaxial holding opening (1 a, 2a).

20. The heating device (10) according to at least one of the preceding claims, **characterised in that** the position element (5) has at least one holding opening (5a) which is disposed substantially coaxially to the holding openings of the contact plates (1a, 2a).

21. The heating device (10) according to at least one of the preceding claims, **characterised in that** both contact plates (1, 2) are connected securely to one another by means of a holding device.

22. The heating device (10) according to at least one of the preceding claims, **characterised in that** a holding element (6) passes through both contact plates (1, 2) and connects them securely to one another.

23. The heating device (10) according to at least one of the preceding claims, **characterised in that** the distance between the two contact plates (1, 2) in the connected state corresponds approximately to the thickness of the position element (5).

24. The heating device (10) according to Claim 22 or Claim 23, **characterised in that** the holding element (6) is made of plastic.

25. The heating device (10) according to at least one of Claims 23 to 24, **characterised in that** the holding element (6) is a rivet ring.

## Revendications

1. Dispositif de chauffage (10) pour un fluide gazeux ou liquide à chauffer, comportant deux plaques de contact (1, 2) destinées à la transmission de la chaleur, entre lesquelles sont disposés au moins un élément de chauffage (3) et au moins un élément à ressort (4) destiné à établir le contact entre l'élément de chauffage (3) et au moins une des plaques de contact, **caractérisé en ce que** l'élément à ressort (4) est un ressort à lame courbe, de préférence avec plusieurs courbures, et **en ce qu'**au moins un élément de positionnement (5) est disposé entre les plaques de contact (1, 2) pour immobiliser l'élément de chauffage (3) et l'élément à ressort (4).

2. Dispositif de chauffage (10) selon la revendication 1, **caractérisé en ce que** l'élément à ressort (4) est un ressort à lame de forme ondulée.

3. Dispositif de chauffage (10) selon au moins l'une quelconque des revendications précédentes, **caractérisé en ce que** l'élément à ressort (4) s'étend dans sa direction longitudinale sensiblement parallèlement à au moins une plaque de contact (1, 2).

4. Dispositif de chauffage (10) selon au moins l'une quelconque des revendications précédentes, **caractérisé en ce que** l'élément à ressort (4) comporte des tronçons de ressort qui sont reliés à des tronçons d'assemblage.

5. Dispositif de chauffage (10) selon au moins l'une quelconque des revendications précédentes, **caractérisé en ce que** l'élément à ressort (4) présente une forme annulaire, au moins par zones.

6. Dispositif de chauffage (10) selon au moins l'une quelconque des revendications précédentes, **caractérisé en ce que** l'élément à ressort (4) est une bague de ressort.

7. Dispositif de chauffage (10) selon au moins l'une quelconque des revendications précédentes, **caractérisé en ce que** les dos des courbures du ressort s'étendent sensiblement dans la direction longitudinale de l'élément à ressort (4).

8. Dispositif de chauffage (10) selon au moins l'une quelconque des revendications précédentes, **caractérisé en ce que** les dos des courbures du ressort s'étendent sensiblement perpendiculairement à la direction longitudinale de l'élément à ressort (4).

9. Dispositif de chauffage (10) selon au moins l'une quelconque des revendications précédentes, **caractérisé en ce que**, sur une vue en élévation de la surface bombée, la surface de base de l'élément à ressort (4) correspond à peu près à la surface de base de l'élément de chauffage (3).

10. Dispositif de chauffage (10) selon au moins l'une quelconque des revendications précédentes, **caractérisé en ce que** l'élément de positionnement (5) est réalisé en matière plastique.

11. Dispositif de chauffage (10) selon au moins l'une quelconque des revendications précédentes, **caractérisé en ce que** l'élément de positionnement (5) comporte au moins une ouverture (5b) destinée à recevoir respectivement au moins un élément à ressort (4) et un élément de chauffage (3).

12. Dispositif de chauffage (10) selon au moins l'une quelconque des revendications précédentes, **caractérisé en ce que** l'élément à ressort (4) est en appui, dans la direction de l'extension du ressort, sur deux extrémités (4b) sensiblement opposées.

13. Dispositif de chauffage (10) selon au moins l'une quelconque des revendications précédentes, **caractérisé en ce que** l'épaisseur (D) de l'élément de positionnement (5) correspond à peu près à la hauteur d'encombrement (H) de l'élément de chauffage (3) et de l'élément à ressort (4).

14. Dispositif de chauffage (10) selon au moins l'une quelconque des revendications précédentes, **caractérisé en ce que** les plaques de contact (1, 2) et l'élément de positionnement (5) sont des plaques sensiblement planes.

15. Dispositif de chauffage (10) selon au moins l'une quelconque des revendications précédentes, **caractérisé en ce que** les plaques de contact (1, 2) et l'élément de positionnement (5) sont disposés sensiblement parallèlement les uns aux autres.

16. Dispositif de chauffage (10) selon au moins l'une quelconque des revendications précédentes, **caractérisé en ce que** les bords périphériques des plaques de contact (1, 2) et de l'élément de positionnement (5) s'étendent sensiblement en alignement les uns avec les autres.

17. Dispositif de chauffage (10) selon au moins l'une quelconque des revendications précédentes, **caractérisé en ce que** les plaques de contact (1, 2) sont sensiblement annulaires.

18. Dispositif de chauffage (10) selon au moins l'une quelconque des revendications précédentes, **caractérisé en ce que** l'élément de positionnement (5) est sensiblement annulaire.

19. Dispositif de chauffage (10) selon au moins l'une quelconque des revendications précédentes, **caractérisé en ce que** les plaques de contact (1, 2) comportent au moins un orifice de retenue (la, 2a) sensiblement coaxial.

20. Dispositif de chauffage (10) selon au moins l'une quelconque des revendications précédentes, **caractérisé en ce que** l'élément de positionnement (5) comporte au moins un orifice de retenue (5a), qui est sensiblement coaxial aux orifices de retenue (la, 2a) des plaques de contact (1, 2).

21. Dispositif de chauffage (10) selon au moins l'une quelconque des revendications précédentes, **caractérisé en ce que** les deux plaques de contact (1, 2) sont reliées de manière fixe l'une à l'autre par l'intermédiaire d'un dispositif de retenue.

22. Dispositif de chauffage (10) selon au moins l'une quelconque des revendications précédentes, **caractérisé en ce qu'**un élément de retenue (6) passe à travers les deux plaques de contact (1, 2) et les relie de manière fixe l'une à l'autre.

23. Dispositif de chauffage (10) selon au moins l'une quelconque des revendications précédentes, **caractérisé en ce que** la distance entre les deux plaques de contact (1, 2) à l'état assemblé correspond sensiblement à l'épaisseur de l'élément de positionnement (5).

24. Dispositif de chauffage (10) selon la revendication 22 ou la revendication 23, **caractérisé en ce que** l'élément de retenue (6) est réalisé en matière plastique.

25. Dispositif de chauffage (10) selon au moins l'une quelconque des revendications 23 à 24, **caractérisé en ce que** l'élément de retenue (6) est une bague à rivets.
